# FASCICULE DE BREVET EUROPEEN

(11) **EP 0 381 589 B1**
(45) Date de publication et mention de la délivrance du brevet: **29.09.1993**
(21) Numéro de dépôt: 90400292.0
(22) Date de dépôt: 02.02.1990
(51) Int. Cl.: F41A 17/64, A22B 3/02, F41A 19/13

(54) **Dispositif de sécurité à la percussion en cas de chute d'appareil actionné par l'explosion d'une cartouche**
Sicherheitsvorrichtung für den Fall des Auftreffens auf eine durch eine Sprengstoffpatrone angetriebene Vorrichtung
Safety device for the impact which occurs when a device activated by the explosion of a cartridge falls down

(30) Priorité: 03.02.1989 FR 8901416
(43) Date de publication de la demande: 08.08.1990
(73) Titulaire: BOBET MATERIEL, F-72470 Champagne (FR)
(72) Inventeur: Termet, Pierre, F-69391 Lyon (FR)
(74) Mandataire: Nony, Michel

(56) Documents cités:
- DE-B- 1 228 165
- DE-C- 810 242
- FR-A- 948 756
- FR-A- 1 003 812
- FR-A- 2 157 913
- US-A- 1 355 417

## Description

La présente invention est relative à un dispositif de sécurité à la percussion en cas de chute pour un appareil actionné par l'explosion d'une cartouche.

On sait que l'on utilise divers types d'appareils qui fonctionnent à l'aide de l'explosion d'une cartouche, comme par exemple les pistolets d'abattage pour animaux.

De tels appareils peuvent présenter des dangers réels lors de mises à feu accidentelles telles que celles qui peuvent survenir lorsque l'appareil tombe à terre alors qu'il est chargé.

On a en effet constaté que, même lorsque l'appareil n'est pas en position d'armement et qu'il tombe verticalement sur l'extrémité du canon, l'inertie du dispositif de percussion est dans bien des cas, suffisante pour mettre la cartouche à feu.

On a déjà proposé certains dispositifs tels que celui décrit dans le document FR-A-2536526, qui évitent de telles mises à feu lorsque l'appareil n'est pas armé.

Dans le dispositif selon ce brevet on fait agir deux ressorts antagonistes sur la masse de percussion, de manière à ce qu'elle soit repoussée vers l'arrière lorsque la percussion a eu lieu et qu'une nouvelle percussion ne puisse plus se produire lors de la chute de l'appareil même s'il n'est pas armé.

Le document US-A-1 355 417 a trait à un mécanisme d'arme à feu qui prévoit également un ressort antagoniste au ressort de percussion pour maintenir la masse de percussion en retrait par rapport à une cartouche.

Ces dispositifs présente toutefois l'inconvénient de nécessiter un parfait équilibrage des deux ressorts antagonistes, ce qui n'est pas toujours facile à réaliser. Par ailleurs, la fatigue du ressort principal de percussion est telle qu'après un nombre plus ou moins élevé de tirs on observe des ratés de percussion. Il en est de même pour le ressort de sécurité qui perd de son efficacité et doit être remplacé.

Le document FR-A-1 003 812 propose un pistolet d'abattage à culasse oscillante dans lequel une mise à feu intempestive est empêchée lorsque le pistolet est en position armée, grâce à un bouton de manoeuvre qui bloque le percuteur dans une position en retrait de la cartouche à percuter.

Mais dans un tel dispositif, rien ne s'oppose à ce que le percuteur n'atteigne la cartouche lors d'une chute du pistolet, lorsque ce dernier se trouve en position non-armée.

De même, le document DE-B-1 228 165 décrit un système de mise à feu d'une charge explosive dans lequel le percuteur est libre de se déplacer dans son logement après avoir percuté une première charge, ce qui le rend susceptible de mettre à feu une seconde charge de façon accidentelle dans le cas où l'appareil fait une chute avant d'avoir été à nouveau armé.

La présente invention a pour objet un dispositif de sécurité qui élimine complètement les inconvénients précités.

La présente invention a pour objet un appareil actionné par l'explosion d'une cartouche, notamment un pistolet d'abattage, du type comportant: une masse de percussion susceptible de coulisser dans un alésage entre une position d'armement et une position de percussion où elle est en contact avec un percuteur; un ressort de percussion susceptible d'entraîner la masse de percussion de sa position d'armement à sa position de percussion; et un organe de verrouillage susceptible de verrouiller la masse de percussion dans sa position d'armement ainsi que dans une position de sécurité entre la position d'armement et la position de percussion l'action du ressort de percussion sur la masse de percussion cessant de s'exercer à une très faible distance avant que la masse de percussion ne projette le percuteur sur la cartouche à percuter, ledit appareil étant caractérisé par le fait que l'organe de verrouillage de la masse de percussion comporte une butée qui est repoussée en direction de la masse de percussion et qui, en position non armée, prend appui contre une surface tronconique de la masse de percussion de manière à repousser constamment cette dernière en l'écartant du percuteur, jusque dans la position où le ressort de percussion commence à exercer un effort sur la masse de percussion.

De cette manière, le ressort de percussion, qui peut être constamment précontraint, repousse lors du tir, la masse de percussion en direction du percuteur jusqu'à un moment qui précède de très peu l'instant de la percussion, laquelle s'effectue grâce à l'énergie emmagasinée par la masse de percussion durant sa longue course préalable .

Lorsque la percussion a eu lieu, la butée qui est solidaire de l'organe de verrouillage de la masse de percussion vient prendre appui contre la surface tronconique de la masse de percussion tout en étant repoussée vers l'axe de celle-ci, ce qui provoque un léger déplacement vers l'arrière de la masse de percussion jusqu'à l'endroit où elle entre à nouveau en contact avec le ressort de percussion.

Ce dispositif conforme à l'invention assure une sécurité à la percussion lorsque l'appareil tombe sur le canon du fait que le dispositif selon l'invention agit alors sur la masse de percussion pour l'empêcher d'actionner le percuteur par une double action.

Tout d'abord, il faut que par le biais de sa surface conique, la masse de percussion comprime le ressort de l'organe de verrouillage.

Ensuite, il faut que la masse de percussion provoque un déplacement de l'organe de verrouillage lequel, en raison de sa masse, offre une résistance supplémentaire qui s'ajoute à celle de son ressort.

Dans le but de mieux faire comprendre l'invention, on va en décrire maintenant à titre d'illustration et sans aucun caractère limitatif, plusieurs modes de réalisation pris comme exemple et représentés sur le dessin annexé.

Sur ce dessin :
- la figure 1 est une vue schématique en coupe d'un appareil d'abattage comportant un dispositif de sécurité selon l'invention.
- la figure 2 est une vue de dessus correspondant à la partie de la figure 1 qui correspond à la coopération de la masse de percussion avec l'organe de verrouillage, et
- la figure 3 est une vue en coupe partielle correspondant à la figure 1 d'une variante du mode de réalisation du ressort de percussion.

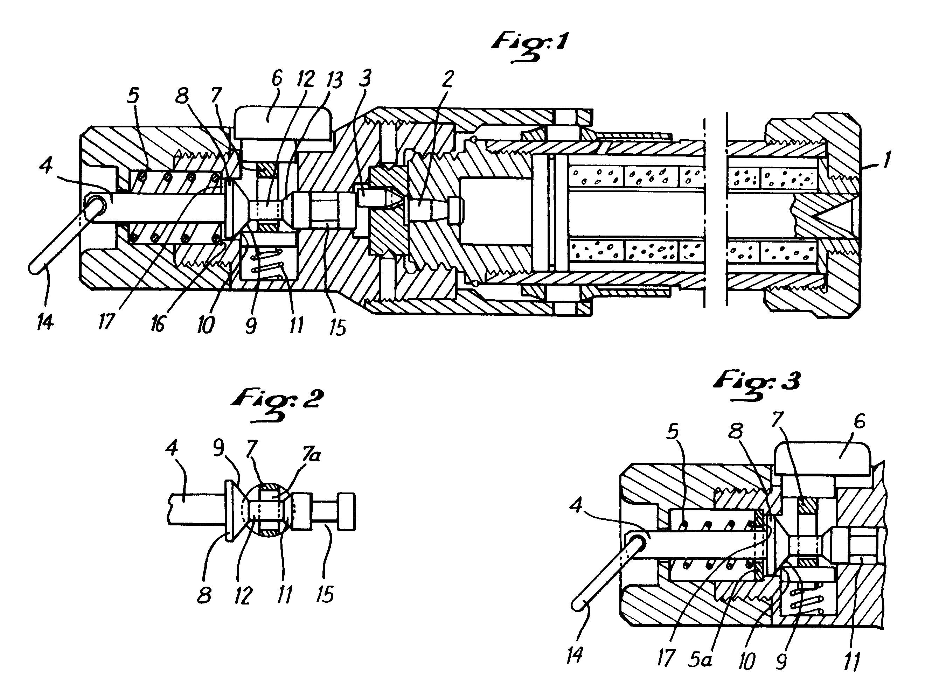

On voit sur la figure 1 une vue en coupe d'un appareil d'abattage selon l'invention dont l'extrémité du canon est désignée par le chiffre de référence 1.

Cet appareil comporte à la manière connue une chambre à cartouche dans laquelle est engagée une cartouche 2 qui est mise à feu par un percuteur 3 lequel est actionné pour ce faire par une masse de percussion 4 repoussée par un ressort 5.

L'organe de verrouillage 6 coulisse dans un orifice cylindrique ce qui lui permet de se déplacer verticalement dans le plan de coupe de la figure 1. Il comporte une lunette 7a qui est traversée par la masse de percussion 4.

Cette dernière comporte successivement de la gauche vers la droite, un épaulement 8 sur lequel agit le ressort de percussion 5, et une surface tronconique 9 sur laquelle prend appui une butée 10 solidaire de l'organe de verrouillage 6 qui est située en dessous de la lunette 7 et qui est repoussée vers le haut par un ressort de rappel 11.

La masse de percussion se poursuit ensuite par une partie 12 cylindrique de plus faible diamètre qui se trouve à l'intérieur de la lunette 7, puis par une surface conique 13 qui permet de repousser vers le bas l'organe de verrouillage lorsqu'on arme le dispositif en tirant la masse de percussion vers l'arrière à l'aide du cordon 14. La masse de percussion présente ensuite une gorge 15 à parois frontales qui sert à maintenir la masse de percussion lorsque l'appareil est armé, par le fait que les bords de la lunette 7 viennent s'engager dans cette gorge 15, comme cela est déjà connu.

Dans le mode de réalisation préféré de la figure 1, le ressort 5 a des spires de diamètre tel que, d'une part son extrémité droite se trouve arrêtée par la légère butée ou épaulement 16 qui est réalisée sur la culasse et que d'autre part ce ressort 5 vienne lors de l'armement de l'appareil s'appuyer par la partie interne de section sur l'épaulement 8 de la masse de percussion, le diamètre de l'axe des spires correspondant sensiblement à celui de l'épaulement 16.

Dans une variante représentée sur la figure 3, une rondelle 5a disposée autour de la partie arrière de la masse de percussion, est soumise à l'action du ressort 5 en venant s'appuyer à la fois sur l'épaulement 16 de la culasse et sur l'épaulement 8 de la masse de percussion. Cette disposition permet une plus grande tolérance en ce qui concerne les dimensions du ressort 5.

On a représenté sur la figure 2 une vue schématique en coupe horizontale de dessus de la figure 1 montrant la coopération de la lunette 7 de l'organe de verrouillage et de la masse de percussion 4.

On retrouve sur cette figure l'épaulement 8 et la partie conique 9 de la masse de percussion ainsi que la partie cylindrique 12 qui passe à l'intérieur de l'ouverture 7a de la lunette 7, tandis que la partie conique 13 se raccorde à l'avant de la masse de percussion qui comporte une gorge 15, comme cela est déjà connu pour recevoir les bords de la lunette 7 de l'organe de verrouillage et maintenir de cette manière la masse de percussion lorsque le dispositif est armé.

On comprend donc que grâce à ce mécanisme, lorsque le dispositif se trouve en position non armée, comme représenté sur la figure 1, la masse de percussion est repoussée vers la gauche sous l'action de la butée 10 qui, poussée par son ressort 11, vient prendre appui contre la surface conique 9.

Grâce à l'invention, le ressort 11 repousse constamment vers le haut l'organe de verrouillage 6 et la butée 10 qui prend appui sur le tronc de cône 9 repousse constamment vers la gauche la masse de percussion qui se trouve ainsi maintenue en retrait du percuteur.

Il en résulte que dès après le tir et à partir du moment où l'utilisateur cesse d'agir sur l'organe de verrouillage 6, le ressort 11, par le biais de la butée 10 et de la surface conique 9 repousse la masse de percussion vers la gauche, amenant l'épaulement 8 en direction du ressort 5.

Si à ce moment là l'appareil chargé mais non armé tombe verticalement sur son extrémité 1 aucune percussion ne peut se produire car pour se déplacer vers la droite et agir sur le percuteur 3 la masse de percussion devrait vaincre à la fois la résistance du ressort 11, le frottement de la butée 10 sur le cône 9, et l'inertie de l'organe de verrouillage 6 qui devrait être repoussé vers le bas de la figure 1, c'est-à-dire horizontalement lorsque la chute s'effectue sur la face avant de l'appareil.

L'expérience prouve que les vitesses avec lesquelles les appareils sont susceptibles de tomber sur leur extrémité avant ne sont pas suffisantes pour communiquer à la masse de percussion une énergie susceptible de vaincre l'ensemble de ces résistances.

On voit donc que l'invention permet de résoudre d'une manière particulièrement simple et efficace le problème de la sécurité à la percussion des appareils de ce type.

## Revendications

1. Appareil actionné par l'explosion d'une cartouche (2), notamment un pistolet d'abattage, du type comportant: une masse de percussion (4) susceptible de coulisser dans un alésage entre une position d'armement et une position de percussion où elle est en contact avec un percuteur (3); un ressort de percussion (5) susceptible d'entraîner la masse de percussion (4) de sa position d'armement à sa position de percussion; un organe de verrouillage (6) susceptible de verrouiller la masse de percussion (4) dans sa position d'armement ainsi que dans une position de sécurité entre la position d'armement et la position de percussion l'action du ressort de percussion (5) qui déplace la masse de percussion (4) cessant de s'exercer à une très faible distance avant que la masse de percussion (4) ne projette le percuteur (3) sur la cartouche (2) à percuter; ledit appareil étant caractérisé par le fait que l'organe de verrouillage (6) de la masse de percussion (4) comporte une butée (10) qui est repoussée en direction de la masse de percussion (4) et qui, en position non armée, prend appui contre une surface tronconique (9) de la masse de percussion (4) de manière à repousser constamment cette dernière en l'écartant du percuteur (3) en direction de la position où le ressort de percussion (5) est arrêté par la butée (16).

2. Appareil selon la revendication 1, caractérisé par le fait que l'extrémité du ressort de percussion (5) qui est dirigée du côté du percuteur peut prendre appui à la fois sur un épaulement (16) de la culasse et sur l'épaulement (8) de la masse de percussion (4).

3. Appareil selon la revendication 1, caractérisé par le fait qu'une rondelle (5a) est située entre l'extrémité du ressort de percussion (5) et l'épaulement (8) de la masse de percussion, ladite rondelle pouvant également prendre appui sur l'épaulement (16) de la culasse.

## Patentansprüche

1. Durch die Explosion einer Patrone (2) betätigte Vorrichtung, insbesondere für eine Schlachterpistole, bestehend
aus einer Stoßmasse (4), die in einer Ausnehmung zwischen einer Spannstellung und einer Schlagstellung, in der sie mit einem Schlagbolzen (3) in Kontakt kommt, verschiebbar ist,
aus einer Spannfeder(5), welche die Stoßmasse (4) von der Spannstellung in die Schlagstellung treibt, und aus einem Verriegelungsorgan (6), das die Stoßmasse (4) in der Spannstellung und einer Sicherungsstellung verriegelt, wobei die die Stoßmasse (4) verschiebende Feder (5) in einem sehr kleinen Abstand vor der Stellung, in der die Stoßmasse (4) den Schlagbolzen (3) gegen die Patrone (2) aufschlägt, ihre Kraftzufuhr beendet,
dadurch gekennzeichnet, daß das Verriegelungsorgan (6) für die Stoßmasse (4) einen Anschlag (10) aufweist, der in Richtung auf die Stoßmasse (4) gedrückt wird und in der ungespannten Stellung gegen die konische Fläche (9) der Stoßmasse (4) so anliegt, daß sie diese ständig zurückdrückt, indem sie diese vom Schlagbolzen (3) in die Richtung abdrängt, in der die Spannfeder (5) durch den Anschlag (16) arretiert wird.

2. Vorrichtung nach Anspruch 1, dadurch gekennzeichnet, daß das Ende der Spannfeder (5), das dem Schlagbolzen zugekehrt ist, sich gleichzeitig an einer Schulter (16) des Bodenstückes und an einer Schulter (8) der Stoßmasse (4) abstützen kann.

3. Vorrichtung nach Anspruch 1, dadurch gekennzeichnet, daß eine Scheibe (5a) zwischen dem Ende der Spannfeder und der Schulter (8) der Stoßmasse vorgesehen ist, wobei die Scheibe auch gegen die Schulter (16) des Bodenstückes anliegen kann.

## Claims

1. Apparatus actuated by the explosion of a cartridge (2), particularly a pistol for abbatoir slaughter, of the type comprising: a firing hammer (4) slidable in a bore between a armed position and a firing position in which it is in contact with a firing pin (3) ; a firing spring (5) for driving the firing hammer (4) from its armed position to its firing position; a locking device (6) for locking the firing hammer (4) in its armed position and also in a safety position between the armed position and the firing position, the action of the firing spring (5) which displaces the firing hammer (4) ceasing to operate at very short distance before the firing hammer (4) projects the firing pin (3) against the cartridge (2) to the fired;
the said apparatus being
characterised in that the locking device (6) for the firing hammer (4) includes a shoulder (10) which is urged towards the firing hammer (4) and which, in the disarmed position, rests on a frustoconical surface (9) of the firing hammer (4) in such a way that it constantly pushes the hammer away from the firing pin (3) toward the place where the firing spring (5) is stopped by the shoulder (16).

2. Apparatus according to claim 1, characterised in that the extremity of the firing spring (5) which is directed towards the firing pin can rest both on a shoulder (16) of the breech and on the shoulder (8) of the firing hammer (4).

3. Apparatus according to claim 1, characterised in that a washer (5a) is located between the extremity of the firing spring (5) and the shoulder (8) of the firing hammer, the said washer also being able to rest on the shoulder (16) of the breech.
